Europäisches Patentamt

European Patent Office

Office européen des brevets

(11) Numéro de publication: **0 246 960**
**A1**

## DEMANDE DE BREVET EUROPEEN

(21) Numéro de dépôt: **87401110.9**

(22) Date de dépôt: **15.05.87**

(51) Int. Cl.³: **G 01 S 13/74**
**G 08 B 13/22**

(30) Priorité: **15.05.86 FR 8606999**

(43) Date de publication de la demande:
**25.11.87 Bulletin 87/48**

(84) Etats contractants désignés:
**AT BE CH DE ES FR GB GR IT LI LU NL SE**

(71) Demandeur: **COMPAGNIE FINANCIERE SAINT-NICOLAS**
**Allée Frion**
**F-93340 Le Raincy(FR)**

(72) Inventeur: **Quentel, Hervé**
**6bis, rue de Chatillon**
**F-75014 Paris(FR)**

(74) Mandataire: **Derambure, Christian**
**BUGNION ASSOCIES 116, Boulevard Haussmann**
**F-75008 Paris(FR)**

(54) Procédé de repérage de proximité de la présence d'un vecteur tel qu'un objet, animal, personne, fixe ou mobile, en particulier un véhicule, et système de repérage pour la mise en oeuvre du procédé.

(57) L'invention concerne un procédé de repérage de proximité de la présence d'un vecteur tel qu'un objet, animal, personne, fixe ou mobile, en particulier un véhicule, susceptible de se trouver soit dans un état passif P d'anonymat dans lequel son repérage n'est pas souhaité, soit dans un état actif A de repérage ou le repérage par au moins une centrale de repérage est souhaité, lorsque le vecteur et la centrale sont à proximité l'une de l'autre.

Elle concerne également un systeme de repérage pour la mise en oeuvre du procédé comportant une centrale de repérage (2) comprenant un émetteur-récepteur à haute fréquence (3) et des moyens d'alarme (4), une première balise (5) associée physiquement et à demeure au vecteur (1), comprenant un émetteur-récepteur à haute fréquence, se trouvant soit à l'état passif, soit à l'état actif, couplée à la centrale (2), une seconde balise (6) associée physiquement et de façon amovible au vecteur (1), comprenant un émetteur-récepteur à haute fréquence couplée à la première balise (5).

FIG.1

## PROCEDE DE REPERAGE DE PROXIMITE DE LA PRESENCE D'UN VECTEUR TEL QU'UN OBJET, ANIMAL, PERSONNE, FIXE OU MOBILE, EN PARTICULIER UN VEHICULE, ET SYSTEME DE REPERAGE POUR LA MISE EN OEUVRE DU PROCEDE

L'invention concerne un procédé de repérage de proximité de la présence d'un vecteur tel qu'un objet, animal, personne, fixe ou mobile, enparticulier un véhicule et le système de reperage pour la mise en oeuvre du procédé.

On connaît déjà différents procédés et systèmes antivols pour véhicules.

La plupart des procédés et systèmes connus (brevets FR 2 281 609, 2 334 539, 2 520 534, 2 532 898 et 2 553 357, EP 00 73 681, CH 514 897 prévoit que l'effraction du véhicule ou son usage non autorisé provoque le déclenchement de l'avertisseur sonore du véhicule. Différentes variantes ont été proposées notamment pour permettre d'empêcher le vol d'accessoires ou pour prévenir le déclenchement accidentel de l'avertisseur sonore. Cependant, ces procédés et systèmes ont comme invonvénients que leur fonctionnement peut être neutralisé, que le déclenchement de l'avertisseur sonore peut intervenir de façon intempestive, et enfin que l'efficacité reste limitée. En effet, le public ne réagit pas systématiquement au déclenchement de l'alerte sonore, croyant à un disfonctionnemnet, le déclenchement de l'alerte sonore en cas d'effraction peut faire fuir l'utilisateur indu du véhicule sans que cet utilisateur ne soit repéré.

On connaît également un procédé et un système pour éviter le vol d'un véhicule (brevet français 2 443 727) qui comporte un émetteur radioélectrique fixé sur le véhicule, dont le fonctionnement est sous la dépendance d'un facteur révélant le vol ainsi qu'un récepteur radioélectrique porté par le possesseur du véhicule, sensible sélectivement à l'émission de l'émetteur et déclenchant un avertissement, à la réception de l'émission provenant de l'émetteur. Toutefois, ce procédé et système a comme inconvénient que le vol n'est mis en évidence que par la présence

simultanée à proximité du véhicule et du possesseur du véhicule ce qui est particulièrmenet aléatoire.

Dans le brevet US 4 177 466, il existe un émetteur central, fixe, qui envoie des signaux codés à un récepteur émetteur porté par le véhicule. Lorsque le signal envoyé par l'émetteur central fixe correspond au code du véhicule, le récepteur émetteur du véhicule envoie un signal reçu par le récepteur d'une borne de localisation. Il est prévu plusieurs bornes de localisation et le véhicule est repéré par triangulation. Le système fonctionne sous réserves que le propriétaire du véhicule ait signalé le vol du véhicule à l'émetteur central de manière que l'émetteur en permanence un signal codé correspondant au code du véhicule volé.

Le brevet GB 2 051 442 prévoit l'existence d'un émetteur récepteur sur le véhicule et un émetteur récepteur porté par l'usager du véhicule, par exemple associé au trousseau de clés. Un premier signal du véhicule vers le trousseau de clés permet, si les codes correspondent, l'envoi d'un deuxième signal du trousseau de clés vers le véhicule, ce qui autorise alors le deblocage des portes.

Toutefois, le système selon le brevet US 4 177 466 ne permet pas un fonctionnemnt automatique, puisque le propriétaire du véhicule doit signaler le vol, ce qui suppose d'abord qu'il en ait lui-même connaissance. Le système selon le brevet GB 2 051 442 implique la proximité du véhicule et du conducteur de véhicule, ce qui ne permet pas son emploi efficace pourla lutte contre le vol.

L'invention vise donc à remédier aux inconvénients mentionnés précedemment et propose de résoudre le problème d'un reperage discret, permanent, généralisé d'un véhicule utilisé de façon indue.

A cet effet, l'invention concerne un procédé de repérage de proximité de la présence d'un vecteur tel qu'un objet, animal, personne, fixe ou mobile, en particulier un véhicule, susceptible de se trouver soit dans un état passif d'anonymat dans lequel son

**0246960**

repérage n'est pas souhaité, soit dans un état actif de repérage ou le repérage par au moins une centrale de repérage est souhaité, lorsque le vecteur et la centrale sont à proximité l'un de l'autre, caractérisé par le fait qu'on associe physiquement et à demeure au vecteur une première balise émetteur-récepteur à haute fréquence se trouvant soit à l'état passif, soit à l'état actif ; on associe physiquement au vecteur, de façon amovible, une seconde balise comprenant un émetteur-récepteur à haute fréquence couplée à la première balise lorsque l'on souhaite que le vecteur soit dans un état passif d'anonymat, on réalise une interrogation à partir d'une centrale de repérage comprenant un émetteur-récepteur à haute fréquence couplée à la première balise de manière que si la première et la seconde balise sont associées toutes deux au vecteur, la centrale de repérage ne reçoit aucune réponse à son interrogation lorsque le vecteur est à proximité de la centrale, la première balise étant à l'état passif et la seconde balise n'étant pas couplée à la centrale de repérage et que si, au contraire, la seconde balise n'est pas associée au vecteur, la centrale de repérage reçoit de la première balise à l'état actif une réponse à son interrogation permettant de repérer le vecteur.

Un système de repérage pour la mise en oeuvre du procédé comporte donc au moins une centrale de repérage comprenant un émetteur-récepteur à haute fréquence et des moyens d'alarme, une première balise associée physiquement et à demeure au vecteur, comprenant un émetteur-récepteur à haute fréquence, se trouvant soit à l'état passif, soit à l'état actif, couplée à la centrale, une seconde balise associée physiquement et de façon amovible au vecteur, comprenant un émetteur-récepteur à haute fréquence couplée à la première balise.

Le procédé et le système de repérage de proximité selon l'invention permettent donc un repérage discret, permanent, généralisé. Le repérage est discret puisqu'il est réalisé à partir d'une centrale de repérage qui peut être constituée par un péage ou un poste de contrôle ou même un véhicule de police, banalisé ou pas. Le repérage est permanent dans la mesure où l'absence du déclenchement d'un avertisseur sonore ou lumineux sur le véhicule conduit l'utilisateur indu à ne pas se méfier sans pour autant empêcher le repérage. Le repérage est généralisé puisque de nombreuses centrales de repérage peuvent être implantées.

Mais, comme on peut le constater, ni l'un, ni l'autre des brevets US 4 177 466 et GB 2 051 442 ne prévoit que le véhicule comporte deux balises distinctes, l'une des balises permettant de rendre l'autre balise active ou passive. Cette disposition permet le fonctionnement automatique du système et donc le repérage effectif du véhicule et non pas seulement l'ouverture des portes, ainsi que le prévoit le brevet GB 2 051 442.

L'invention sera bien coprise grâce à la description qui suivra en référence aux dessins annexés dans lesquels :

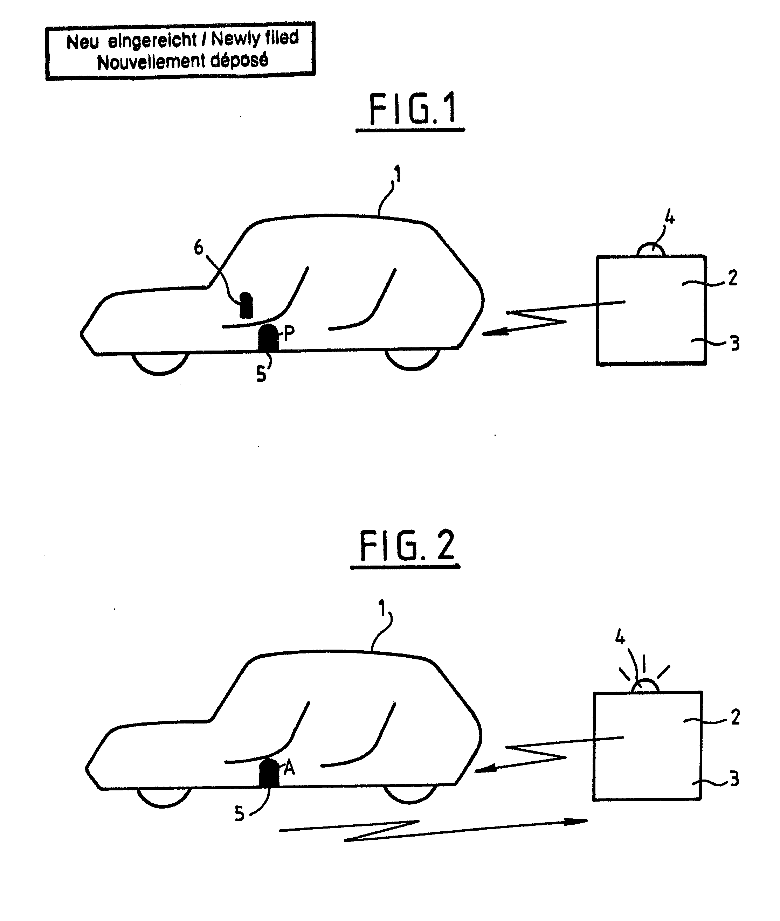

. les figures 1 et 2 sont deux vues schématiques illustrant le procédé selon l'inventnion respectivement lorsque le vecteur est dans son état passif d'anonymat et lorsque le vecteur est dans son état actif de repérage.

L'invention concerne un procédé et un système de repérage de proximité de la présence d'un vecteur 1 tel qu'un objet, animal, personne, fixe ou mobile en particulier un véhicule, susceptible de se trouver soit dans un état passif P d'anonymat dans lequel son repérage n'est pas souhaité (figure 1), soit dans un état actif A de repérage où le repérage par au moins une centrale de repérage 2 est souhaité, lorsque le vecteur 1 et la centrale 2 sont à proximité l'un de l'autre.

Le système de repérage comporte au moins une et généralement une pluralité de centrale de repérage 2 comprenant chacune un émetteur-récepteur à haute fréquence 3 et des moyens d'alarme 4 ; une première balise 5 associée physiquement et à demeure au vecteur 1, comprenant un émetteur-récepteur à haute fréquence se trouvant soit à l'état passif P, soit à l'état actif A, couplée à la centrale 2; et une seconde balise 6 associée physiquement et

5

0246960

de façon amovible au vecteur 1, comprenant un émetteur-récepteur à haute fréquence couplée à la première balise 5.

Ainsi qu'il a été indiqué précédemment, le vecteur 1 est préférentiellement un véhicule mais peut-être, plus généralement, un objet ou un être humain, fixe ou mobile. La centrale de repérage 2 est fixe ou mobile et comporte par exemple un guichet, un péage, un véhicule ou même par le responsable soi-même du vecteur 1.

La première balise 5 est préférentiellement placée de façon camouflée, invisible, indétectable, inviolable sur ou dans le vecteur 1. Par exemple, dans le cas où le vecteur 1 est un véhicule automobile, la première balise 5 est placée sous ou dans un siège, camouflée dans le tableau de bord ou encore logée dans la malle ou sous le capot.

La seconde balise 6 est préférentiellement transportable par le responsable du vecteur 14 de manière à pouvoir être associée au vecteur 1. Dans le cas où le vecteur 1 est un véhicule, la seconde balise 6 peut être associée, par exemple, aux clefs du véhicule.

Selon l'invention, la seconde balise 6 est associée physiquement au vecteur 1 lorsque l'on souhaite que le vecteur 1 soit dans son état passif P d'anonymat (figure 1). On réalise une interrogation à partir de la centrale de repérage lorsque le vecteur 1 est à proximité. Si la première et la seconde balise 5, 6 sont associées toutes deux au vecteur 1, la centrale de repérage 2 ne reçoit aucune réponse à son interrogation, la première balise 5 étant à l'état passif P et la seconde balise 6 n'étant pas couplée à la centrale de repérage 2 (figure 1). Si au contraire, la seconde balise 6 n'est pas associée au vecteur 1, la centrale de repérage 2 reçoit de la première balise 5 se trouvant à l'état actif A, une réponse à son interrogation permettant de repérer la présence du vecteur 1.

Selon l'invention, on fait passer la première balise 5 à son état actif A en dissociant la seconde balise 6 du vecteur 1.

Préférentiellement, on fait passer la première balise 5 à son état actif A non seulement en dissociant la seconde balise 6 du vecteur 1 comme mentionné précédemment, mais aussi, de plus, en déclenchant de façon supplémentaire la première balise 5. Préférentiellement, on déclenche de façon supplémentaire la première balise 5 de façon automatique par un évènement affectant le vecteur 1, cet évènement étant totalement indépendant de la seconde balise 6. Par exemple, on déclenche la première balise 5 par mise en mouvement ou déplacement du vecteur 1. Pour éviter les déclenchements intempestifs, on prévoit, préférentiellement, un seuil de déclenchement de sorte que la première balise 5 n'est déclenchée que par mise en mouvement ou déplacement du vectuer excédant une certaine durée de seuil.

Le système de repérage pour la mise en oeuvre du procédé comporte donc, ainsi qu'il a été mentionné précédemment, une centrale de repérage 2, une première balise 5 portée par le vecteur 1 de façon permanente, et une seconde balise 6, portée par le vecteur 1 de façon amovible.

La première balise 5 peut comporter également des moyens de déclenchements. Ces moyens de déclenchement sont par exemple des moyens sensibles au mouvement ou à l'accélération.

Une application particulière mais non limitative de l'inventnion est celle où le vecteur 1 est un véhicule, la première balise 5 étant placée dans le véhicule et étant masquée dans celui-ci, la seconde balise 6 étant associée aux clefs du véhicule.

L'invention peut faire l'objet de nombreuses formes d'exécution.

Ainsi, la première balise 5 peut être constituée d'un circuit électronique, d'une source d'alimentation en énergie électrique de longue durée et de bonne fiabilité telle que, par exemple, une pile au lithium, d'un capteur de vibrations ou d'accélérations, et enfin d'une antenne. Le capteur d'accélérations peut comporter une masselotte mobile portée par des ressorts, associé à un circuit électrique pour l'ouvrir ou le fermer.

La seconde balise 6 est du même type général que la première balise 5 à l'exception du capteur de vibrations ou d'accélérations.

Le circuit électronique de la première ou de la seconde balise 5, 6 peut comporter les composants suivants : un microprocesseur (unité centrale, mémoire morte et mémoire vive, dispositifs d'entrée et de sortie), une horloge tel qu'un oscillateur à quartz ou à résistance-capacité, un émetteur-récepteur comportant des moyens de modulation et de démodulation d'une porteuse à haute fréquence. Le récepteur est en veille continuelle. Lorsqu'il reçoit un signal dans la bande de fréquence qu'il contrôle, il le décode et le transmet au microprocesseur qui le vérifie et contrôle qu'il s'agit d'un message le concernant. A cet effet, il est équipé de clefs de contrôle. De la même manière, les messages à émettre sont délivrés par le microprocesseur à l'émetteur. Les phases d'émissions sont rares et courtes et pour cette raison la consommation du circuit est très faible. L'antenne est de préférence omnidirectionnelle.

La centrale de repérage 2 comporte un circuit électronique semblable à ceux des balises 5, 6, mais dont la mémoire est de capacité plus importante et également d'un dispositif de commande et d'un afficheur. La source d'alimentation électrique peut être une pile ou une batterie rechargeable ou encore une alimentation stabilisée et raccordée au secteur. La centrale de repérage 2 comporte également un clavier de commande et un afficheur alphanumérique ainsi qu'une antenne directionnelle. La centrale de repérage 2 peut naturellement être reliée à un réseau de communication.

Le mode de réalisation qui vient d'être décrit n'est nullement limitatif et d'autres formes de réalisation peuvent être envisagées.

## REVENDICATIONS

1. Procédé de repérage de proximité de la présence d'un vecteur (1) tel qu'un objet, animal, personne, fixe ou mobile, en particulier un véhicule, susceptible de se trouver soit dans un état passif P d'anonymat dans lequel son repérage n'est pas souhaité, soit dans un état actif de repérage A ou le repérage par au moins une centrale (2) de repérage est souhaité, lorsque le vecteur (1) et la centrale (2) sont à proximité l'un de l'autre, caractérisé par le fait qu'en combinaison, on associe physiquement et à demeure au vecteur (1) une première balise (5) émetteur-récepteur à haute fréquence se trouvant soit à l'état passif P, soit à l'état actif A, on associe physiquement au vecteur (1), de façon amovible, une seconde balise (6) comprenant un émetteur-récepteur à haute fréquence, couplée à la première balise (5) lorsque l'on souhaite que le vecteur (1) soit dans un état passif P d'anonymat, on realise une interrogation à partir d'une centrale de repérage (2) comprenant un émetteur-récepteur à haute fréquence couplée à la première balise (5) de manière que si la première et la seconde balise (5,6) sont associées toutes deux au vecteur (1), la centrale de répérage (2) ne reçoit aucune réponse à son interrogation lorsque le vecteur (1) est à proximité de la centrale (2), la première balise (5) étant à l'état passif P et la seconde balise (6) n'étant pas couplée à la centrale de repérage (2) et que si, au contraire, la première balise (6) n'est pas associée au vecteur (1), la centrale de repérage (2) reçoit de la première balise (5) à l'état actif A une réponse à son interrogation permettant de repérer le vecteur (1), ce procédé permettant, ainsi un repérage de proximité, discret, permanent, généralisé.

2. Procédé selon la revendication 1 caractérisé par le fait qu'on fait passer la première balise (5) à son état actif A en dissociant la seconde balise (6) du vecteur (1).

3. Procédé selon l'une quelconque des revendications 1 et 2, caractérisé par le fait qu'on fait passer la première balise (5) son état actif A en dissociant la seconde balise (6) du vecteur (1) et, de plus, en déclenchant de façon supplémentaire la première balise (5).

4. Procédé selon la revendication 3, caractérisé par le fait qu'on déclenche de façon supplémentaire la première balise (5) automatiquement par un évènement affectant le vecteur (1) et totalement indépendant de la seconde balise (6).

5. Procédé selon l'une quelconque des revendications 3 et 4, caractérisé par le fait qu'on déclenche la première balise (5) par mise en mouvement ou déplacement du vecteur (1).

6. Procédé selon la revendication 5, caractérisé par le fait qu'on déclenche la première balise (5) par mise en mouvement ou déplacement du vecteur (1) excédant une certaine durée de seuil.

7. Système de repérage de proximité de la présence d'un vecteur (1) tel qu'un objet, animal, personne fixe ou mobile, en particulier
un véhicule, susceptible de se trouver soit dans un état passif d'anonymat dans lequel son repérage n'est pas souhaité, soit dans un état passif d'anonymat dans lequel son repérage n'est pas souhaité, soit dans un état actif A de repérage ou le repérage par au moins une centrale (2) est souhaité, lorsque le vecteur (1) et la centrale (2) sont à proximité l'un de l'autre, caractérisé par le fait qu'il comporte en combinaison au mjoins une centrale de repérage (2) comprenant un émetteur-récepteur à haute fréquence et des moyens d'alarme, une première balise (5) associée physiquement et à demeure au vecteur (1), comprenant un émetteur-récepteur à haute fréquence, se trouvant soit à l'état passif P, soit à l'état actif A, couplée à la centrale, une seconde balise (6) associée physiquement et de façon amovible au vecteur (1), comprenant un émetteur-récepteur à haute fréquence couplée à la première balise, à système permettant, par sa mise en oeuvre un repérage de proximité, discret, généralisé.

8. Système de repérage de proximité selon la revendication 7, caractérisé par le fait que la première balise (5) comporte également des moyens de déclenchement.

9. Système selon la revendication 8, caractérisé par le fait que les moyens de déclenchement de la première balise (5) sont des moyens sensibles au mouvement ou à l'accélération.

10. Système selon l'une quelconque des revendications 1 à 9, caractérisé par le fait que le vecteur (1) est un véhicule, la première balise (5) étant placée dans le véhicule et étant masquée dans celui-ci, la seconde balise (6) étant associée aux clés du véhicule.

11. Système selon l'une quelconque des revendications 7 à 10, caractérisé par le fait qu'une première et seconde balise (5, 6) comportent en premiuer lieu une alimentation électrique, en second lieu un circuit électronique comportant un microprocesseur, une horloge, un émetteur-récepteur, le récepteur étant en veille continuelle.

12. Système selon l'une quelconque des revendications 7 à 11, caractérisé par le fait que la centrale de repérage (2) comporte en premier lieu une source d'alimentation électrique, en second lieu une antenne directioinnelle et en troisième lieu un circuit électronique comportant un microprocesseur, une horloge, un émetteur-récepteur.

## FIG.1

## FIG. 2

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,Y | US-A-4 177 466  (W.R. REAGEN)  <br> * En entier * | 1,2,7, 11,12 | G 01 S  13/74 <br> G 08 B  13/22 |
| D,Y | GB-A-2 051 442  (J.A. HOWARD)  <br> * Abrégé; figure 2A * | 1,2,7, 11,12 | |
| Y | FR-A-2 460 813  (OUREVITCH)  <br> * En entier * | 1,2,7, 11,12 | |
| A | US-A-3 876 980  (A. HAEMMIG) <br> * Colonne 3, ligne 35 - colonne 4, ligne 5; figure 3 * | 1 | |
| A,D | FR-A-2 443 727  (SICLOS)  <br> * En entier * | 1,3,4, 7,8 | **DOMAINES TECHNIQUES RECHERCHES (Int Cl 4)** <br><br> G 01 S <br> G 08 B <br> G 08 G |
| A | EP-A-0 073 681  (K. SINGH) <br> * Page 1, ligne 20 - page 8, ligne 19; figures 1,2 * | 1 | |
| A | CH-A- 514 897  (AUTOPHON) <br> * En entier * | 1,7 | |

Le présent rapport de recherche a été établi pour toutes les revendications

| Lieu de la recherche | Date d'achèvement de la recherche | Examinateur |
|---|---|---|
| LA HAYE | 24-08-1987 | VAN WEEL E.J.G. |